# EUROPEAN PATENT SPECIFICATION

(11) **EP 0 982 570 B1**
(45) Date of publication and mention of the grant of the patent: **05.10.2005**
(21) Application number: 99500141.9
(22) Date of filing: 09.08.1999
(51) Int. Cl.: G01G 19/30, G01G 19/387

(54) **Automatic weighing machine for fruit and the like**
Automatische Waage für Obst und ähnliches
Balance automatique pour fruits et choses semblables

(30) Priority: 25.08.1998 ES 9801797
(43) Date of publication of application: 01.03.2000
(73) Proprietor: Paniagua Olaechea, Rosalina, E-46600 Alzira (Valencia) (ES)
(72) Inventor: Paniagua Olaechea, Rosalina, E-46600 Alzira (Valencia) (ES)
(74) Representative: Durán Moya, Carlos

(56) References cited:
- EP-A- 0 803 716
- DE-A- 3 709 099
- FR-A- 2 580 071
- US-A- 4 420 051
- US-A- 4 586 613

## Description

The present invention relates to a machine intended for the automatic weighing of fruit and the like, which has original constructional and functional features compared with the prior art.

The weighing machine for fruit and the like which is the subject of the present invention is intended to receive fruit or other bulk agricultural products, placing them in a series of trays or baskets, carrying out continuously the individual weighing thereof, and afterwards conveying the fruit or other vegetable produce contained in each of the trays to a specific one of various outlet channels, so that in the latter there can be obtained combined weights of the said fruit or vegetable produce which correspond to a desired weighed value for the purpose of packaging in specific weights. For this purpose, a central computer controls the operation of the machine, registering the individual weights of each of the trays and combining them in such a - manner that in each of the outlet channels-of the machine there is obtained, by combination of the trays or baskets necessary therefor, the precise packaging weight that is desired.

In the machines known at present for carrying out the said function, the assembly of support and guiding devices for the individual trays is very complicated, especially owing to the fact that the guiding of the trays is very complex, requiring a multiplicity of guides which, taking into account the fairly complicated shapes of the latter, impart a great overall complexity to the machine, with the consequent increase in weight and cost, and greater vulnerability during use.

EP-A-083716 discloses an automatic weighing machine according to the preamble of claim 1.

The machine of the present invention is intended to remedy the drawbacks mentioned above, by procuring characteristics of great simplicity, which reduce the cost of manufacture of the machine as well as its maintenance, further rendering operation generally more reliable. This object is obtained according to the present invention by means of the automatic weighing machine of claim 1.

Preferred embodiments are subject of the dependent claims 2 to 9.

The machine of the present invention is based fundamentally on providing a series of individual circuits for the guiding of the trays carrying the fruit or other vegetable produce, which trays are supported solely by one of their sides, being cantilevered and being at all times arranged horizontally by the action of an assembly of a retainer with an opposing spring which is freed for the discharge of the fruit, so that weighing is effected when the tray rests, by means of fixed stops with which the latter is provided, on the platform of the weighing load cell, and for the tipping out of the fruit, the tray as a whole tilts into a position at approximately 90°, permitting the complete tipping out of the load and returning to the original position by the action of a ramp provided therefor.

For feeding fruit to the different assemblies of trays which form the various parallel cyclic paths of the machine, the latter has a conventional feeder, for example, a scoop feeder, which feeds the fruit to intermediate platforms which, if required, are provided with vibrating devices, or with conveyor belts, towards the fixed feed channels of each of the lines of trays.

In a variant of the machine, the latter will comprise a belt feeder with articulated scoops intended to transfer the fruit directly to the conveying trays of the machine.

The feeder assembly of the machine and the weighing and measuring assembly which are provided with the outlet channels are separated from one another from the physical standpoint, in order to avoid the transmission of undue vibrations from the conveyor assembly to the weighing and feeding unit.

For greater understanding thereof there are provided, by way of an explanatory but non-limiting example, drawings of a fruit weighing machine produced inaccordance with the present invention.
Figure 1 shows diagrammatically a view in side elevation of the machine of the present invention.
Figure 2 shows a likewise diagrammatic plan view of the machine illustrated in Figure 1.
Figure 3 shows a detail of the guiding of the assembly of trays.
Figure 4 shows a view in elevation of one of the individual trays.
Figure 5 shows a plan view of the tray in Figure 4.
Figures 6 and 7 are respective sections through a tray in the section planes indicated.
Figure 8 shows a detail in cross-section of the fruit tray of the preceding figures.
Figures 9 and 10 are respective views in side elevation of a fruit-carrying tray to explain its operation.
Figure 11 shows a diagrammatic view in side elevation of a variant of the machine of the present invention.
Figure 12 shows a plan view of the machine in Figure 11.
Figure 13 shows a detail of the machine in Figures 11 and 12.
Figures 14 and 15 illustrate respective details of the articulation and position control of the trays.

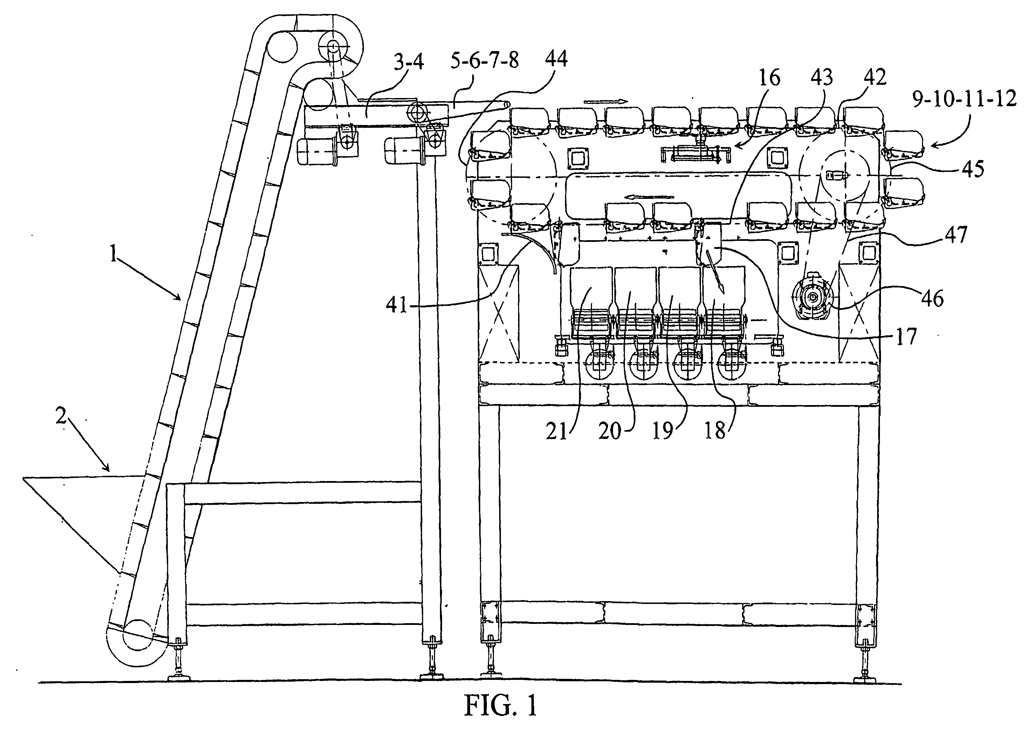

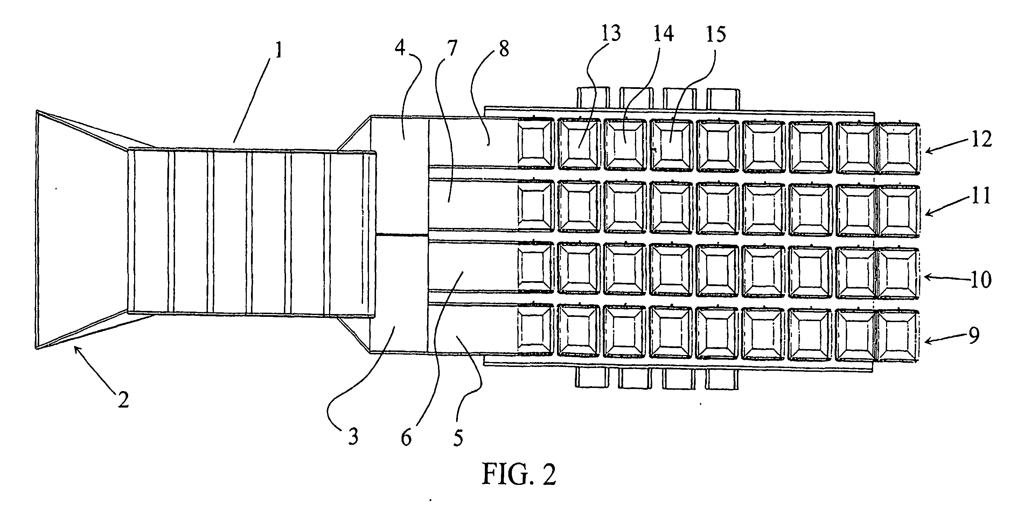

As can be seen in Figure 1, the machine has a bulk fruit feeder 1, of the scoop type or of another type, which receives the fruit in a hopper 2 and delivers it to a feed assembly of the lines of trays of the machine, which can be seen in greater detail in Figure 2. In the said figure it will be observed that the fruit is delivered firstly to intermediate containers 3 and 4 of the vibrating type or in the form of conveyor belts which will contain a sufficient quantity of fruit to maintain the regular operation of the machine, delivering it to the channels of the lines of trays which have been shown as four in number in the example illustrated, being indicated by 5, 6, 7 and 8. Each of the said feed channels, actuated by means of devices and vibrators, or assuming the form of conveyor belts, conveys the fruit to one of the corresponding lines of trays of the machine, which in the case illustrated are indicated by 9, 10, 11 and 12. Each of the said lines of trays has multiple identical successive trays forming the lines such as, for example, the trays 13, 14, 15 of the line 12.

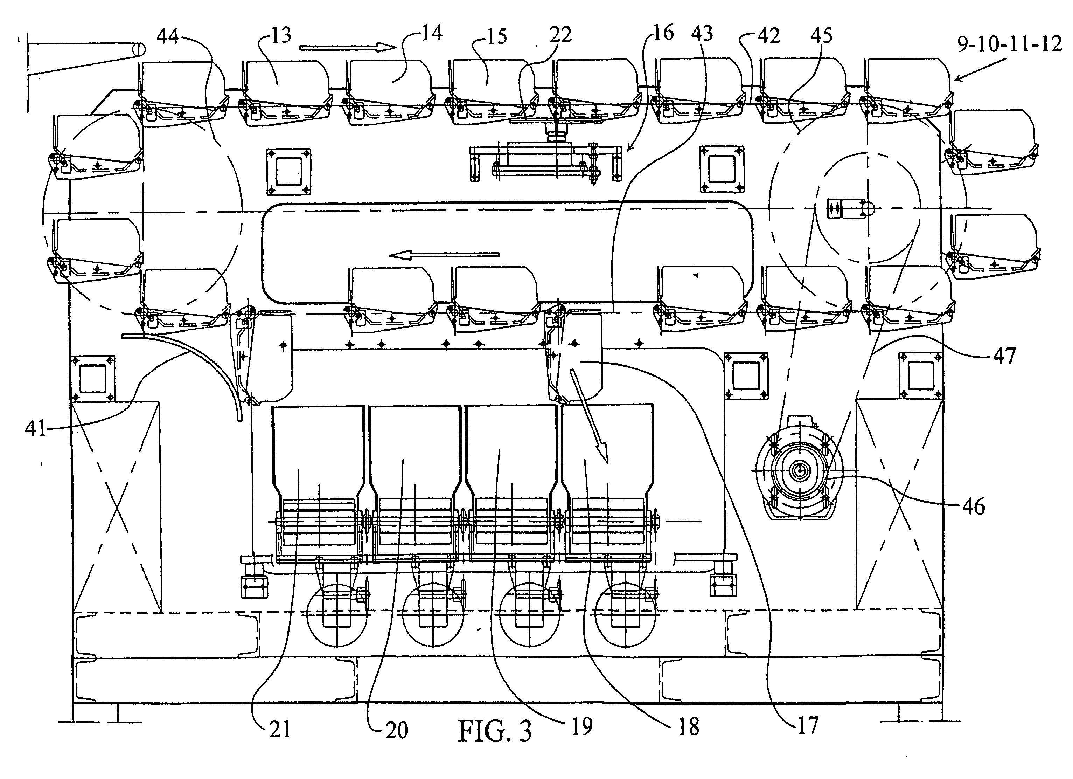

As will be observed in Figure 3, the line of trays is guided by a conveyor by means of which said trays are kept at all times in a horizontal position, passing along an upper horizontal branch of the conveyor in which there is an intermediate position with the weighing unit indicated generally by 16, and a lower branch parallel to the upper branch in which the trays tip their contents selectively into various transverse channels for the outlet of the fruit towards its packaging in individual bags or containers. In Figure 3, one of the trays, indicated by 17, is shown in a position tilted towards one of the various outlet channels, which have been indicated by 18, 19, 20 and 21. It will be understood that the number of lines of trays and the number of outlet channels will be variable according to the dimensions of the machine and the production for which it is intended.

A central computer will co-ordinate the operation of the machine, starting up or stopping the upper feeders 5, 6, 7 and 8 according to maximum and minimum detectors associated with the latter, and the weighing operations carried out in the unit 16 will be recorded for the purpose of knowing the exact weight of fruit of each of the trays. On the basis of this information and of the weights to be packed, the machine will tip out the trays into the outlet channels 18, 19, 20 and 21 in order to obtain in each of the latter the precise weight of fruit which it is desired to package.

Each of the fruit-carrying trays is cantilevered on the conveyor, having a clamping retainer system which maintains the tray in a horizontal position, being subject to the action of an opposing spring which is freed for the discharge of the fruit. For weighing, there are fixed stops on the tray by means of which the latter can rest on the weighing platform 22 of the weighing unit indicated by 16. When the trays reach the positions for discharge onto the outlet channels 18, 19, 20 and 21, there will be actuated, when required, a movable stop for each of the said channels, actuated pneumatically, hydraulically or by electromagnets or in some other way, and which will effect the opening of the retainer of each tray and the tilting of the latter, with the fruit dropping onto the conveyors.

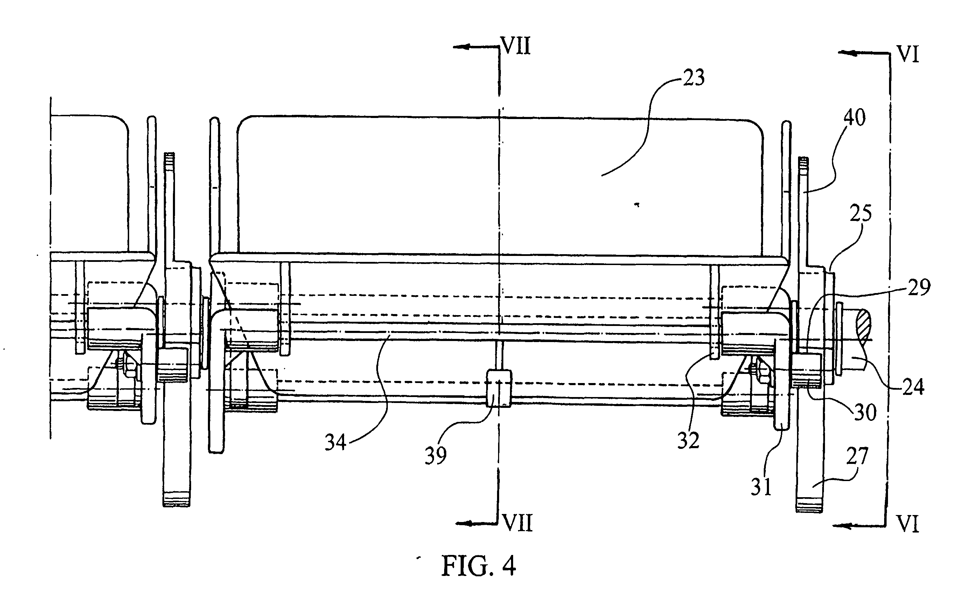

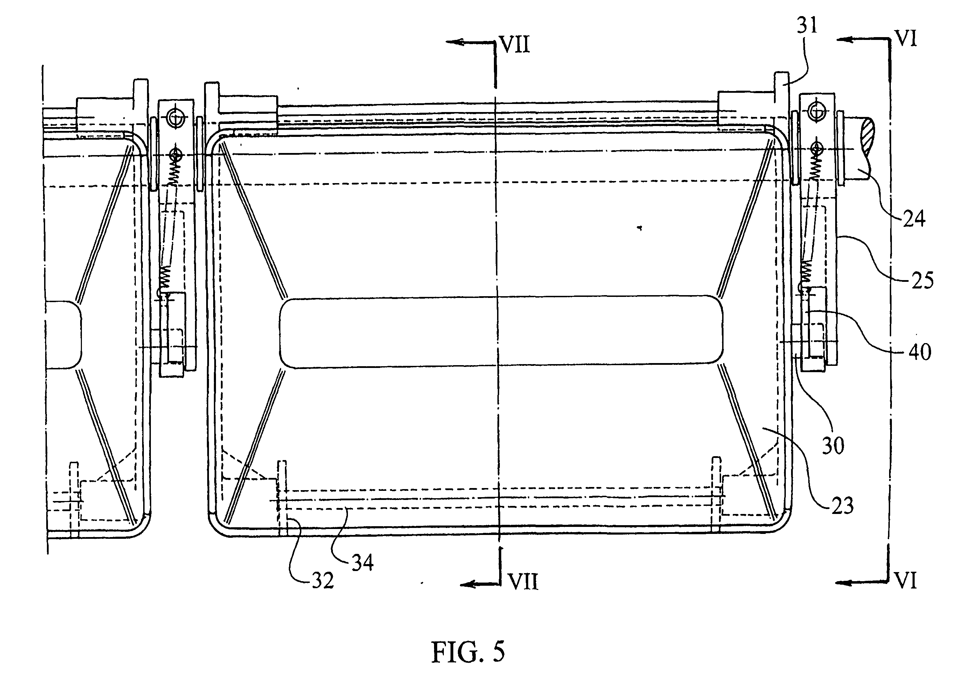

In Figures 4 to 10 can be observed the detailed constitution of the trays and the locking devices for the latter.

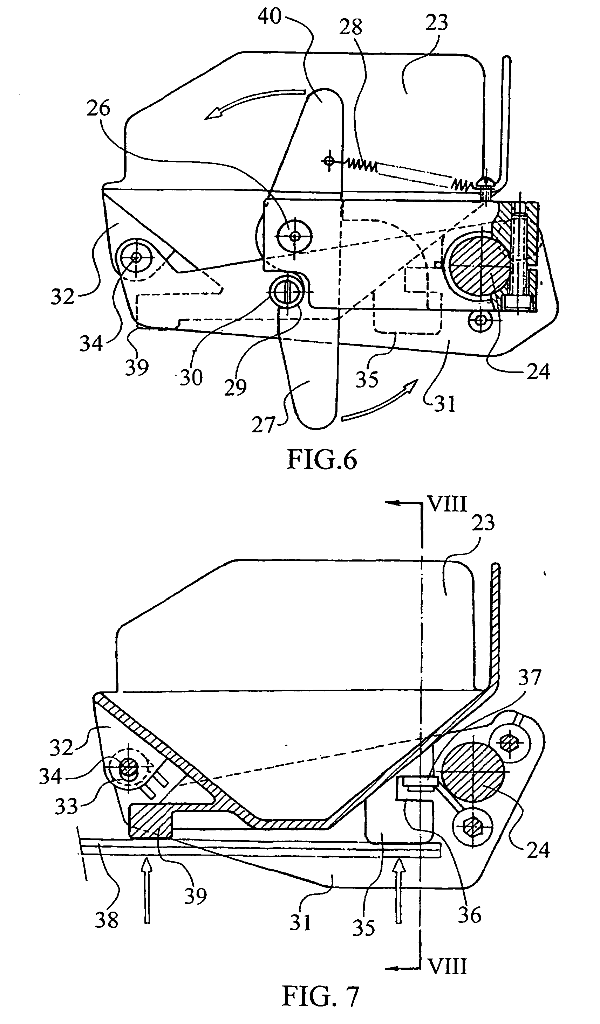

In the figures mentioned, there can be seen the coupling of a tray 23 so that it tilts with respect to a transverse shaft 24 attached to the conveyor, the said shaft 24 carrying fixed supports 25 in which there is incorporated rotatably with respect to the axis 26 a locking double arm lever 27, the rest position of which is determined by the opposing spring 28, and which has a wide indentation 29 in which there is received, with vertical clearance, a journal 30 provided with a rotatable bushing, fixed to the frame 31 carrying the tray 23. The tray 23 is mounted on the frame 31 by means of the flanges 32 which have slots 33 through which passes a rod 34 fixed at both lateral ends of the frame 31. In its rear part the tray 23 has two wings 35, only one of which has been shown in Figure 7, and which have rear apertures 36 into which are introduced respective horizontal stops, such as the stop 37 of the frame 31.

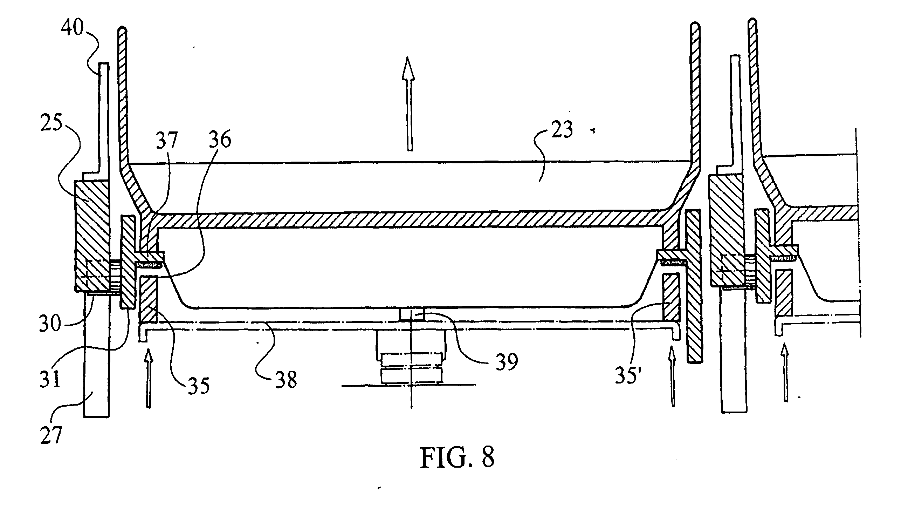

This arrangement allows the limited vertical displacement of the tray 23, given the clearance existing in the slots 33 and the rear indentations 36. The said limited vertical displacement is utilized in the weighing station 16 so that the tray can rest on a plate 38 on which it supports itself by the lower edges of the rear wings 35 and 35', Figure 8, and with the lower edge of the front extension 39. In this way, as the tray is momentarily disconnected with respect to the frame 31, it will rest only on the platform 38 of the weighing device, so that the latter will emit a signal corresponding to the weight of the tray, the tare of which is known, the computer therefore retaining in the corresponding file the value of the nett weight of fruit of each tray.

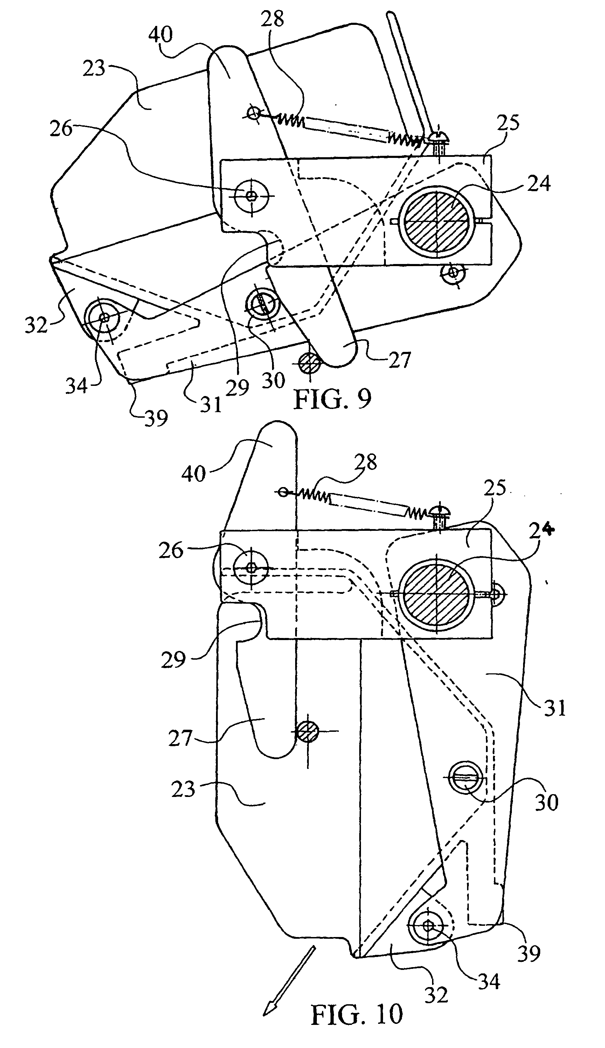

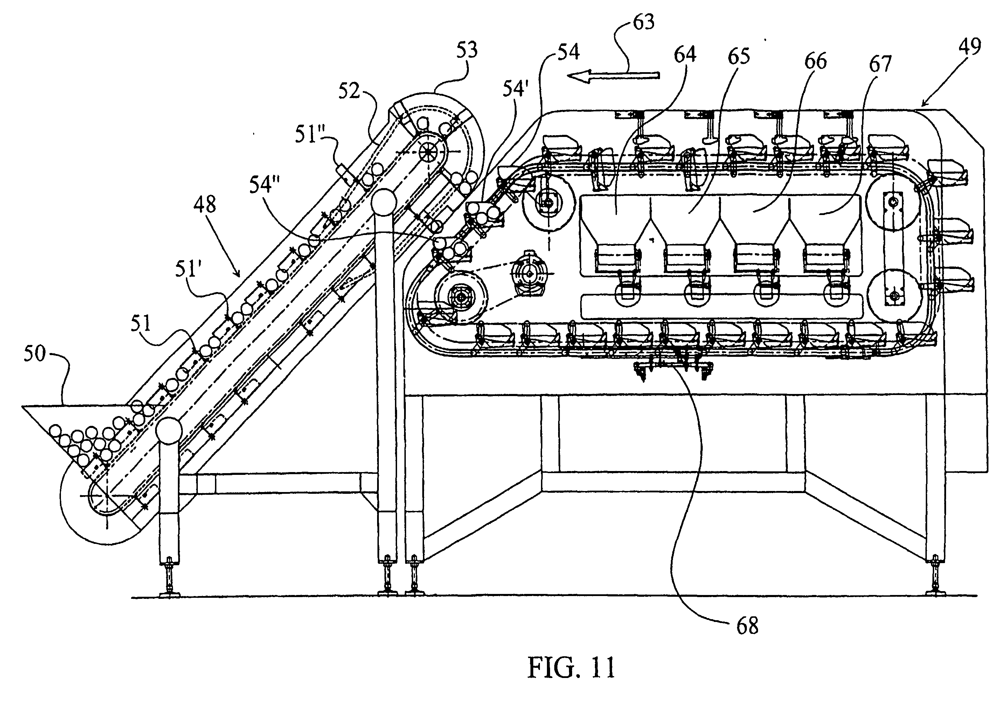

For the discharge of the tray the tilting movement of the double arm 27 is produced, customarily by means of an actuator, not shown, which acts on the upper end 40 of the double arm lever 27, causing it to rotate on the axis 26 and permitting the tilting of the tray by the effect of gravity, rotating on the shaft 24. Figures 9 and 10 show an intermediate position of rotation of the double arm lever 27 and the final position of rotation of the tray in which the latter will have rotated through 90°, permitting the rapid discharge of the fruit and/or horticultural products contained therein. For the return of the tray to the horizontal position after discharge, the machine will have a guide ramp 41, Figures 3 and 1, at the end of the lower horizontal run of the conveyor for the trays, which will effect the reverse rotation of the latter until they reassume the horizontal position, being locked again by the double arm lever 27.

The conveyor chain assembly, as already indicated previously, will have an upper branch indicated diagrammatically by 42, and a lower branch likewise indicated diagrammatically by 43, the said conveyor being guided between the end wheels 44 and 45, there being a single drive by means of the motor 46 and a conventional system of belts or chains 47.

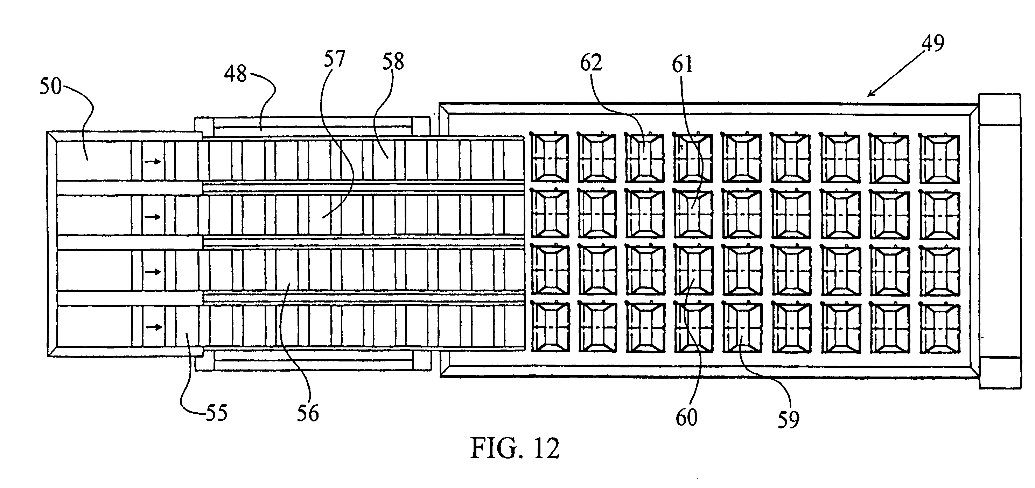

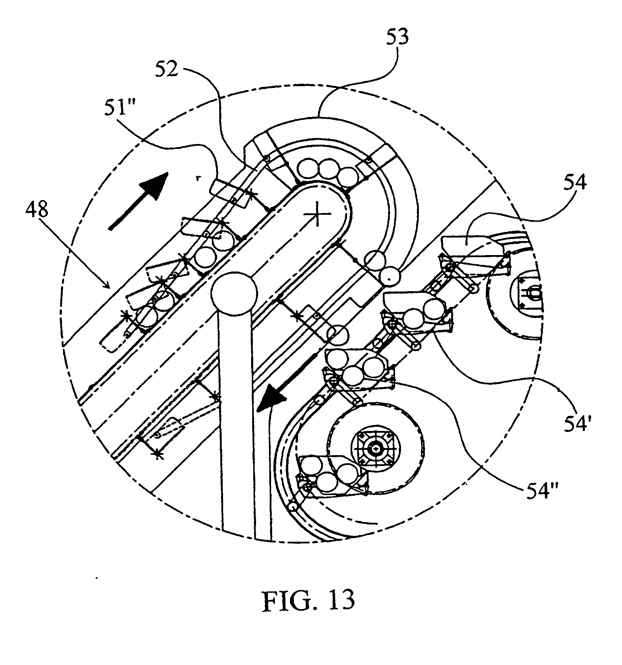

The variant shown in Figures 11 to 15 has a feed unit 48 and a weighing and feeding unit 49, which are physically disconnected from each other. The conveyor unit 48 receives the fruit in an inlet hopper 50, from which the fruit is extracted by the different scoops 51, 51' which are of an articulated type, so that by the action of a fixed guide 52 they assume a deployed position, as shown by the scoop 51" of Figure 11. An upper cowling 53 helps to guide the fruit, which is poured directly into the trays 54, 54', 54" which form a line of trays in the unit 49. The number of feed guides of the conveyor device 48 and of the unit 49 will correspond to each other. Figure 12 shows an embodiment by way of example in which there can be observed four feed lines 55, 56, 57 and 58 which take the fruit to an equal number of lines of trays indicated by 59, 60, 61 and 62, respectively.

As will be observed in Figure 11, the direction of movement of the trays of the unit 49 is indicated by the arrow 63, so that in this variant it is in the upper transport branch for the trays where there occurs the selection of the tipping out of the latter into the different outlet channels which are to receive the measured quantities, controlled by a computer, the said outlet channels having been indicated by 64, 65, 66 and 67.

Weighing is carried out in the lower branch of the conveyor on the weighing platform provided with scales 68.

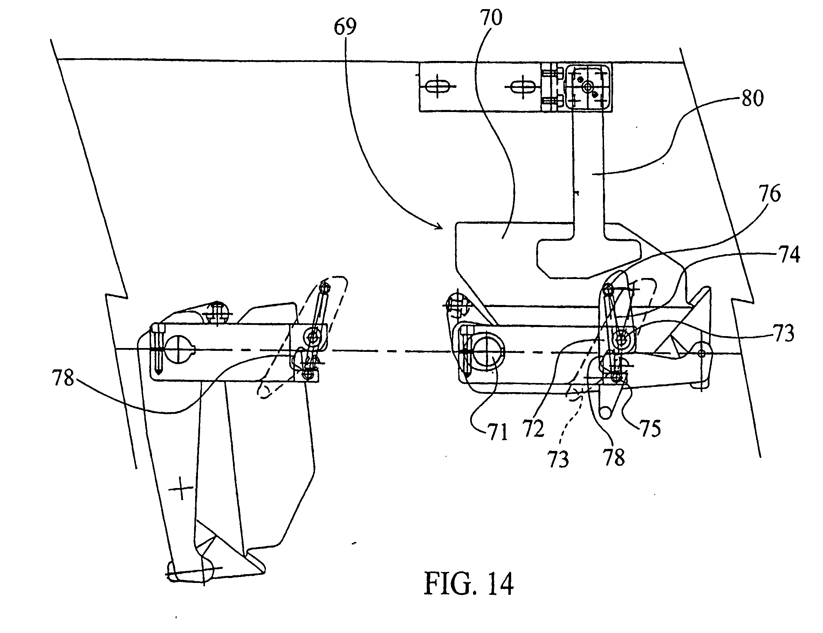

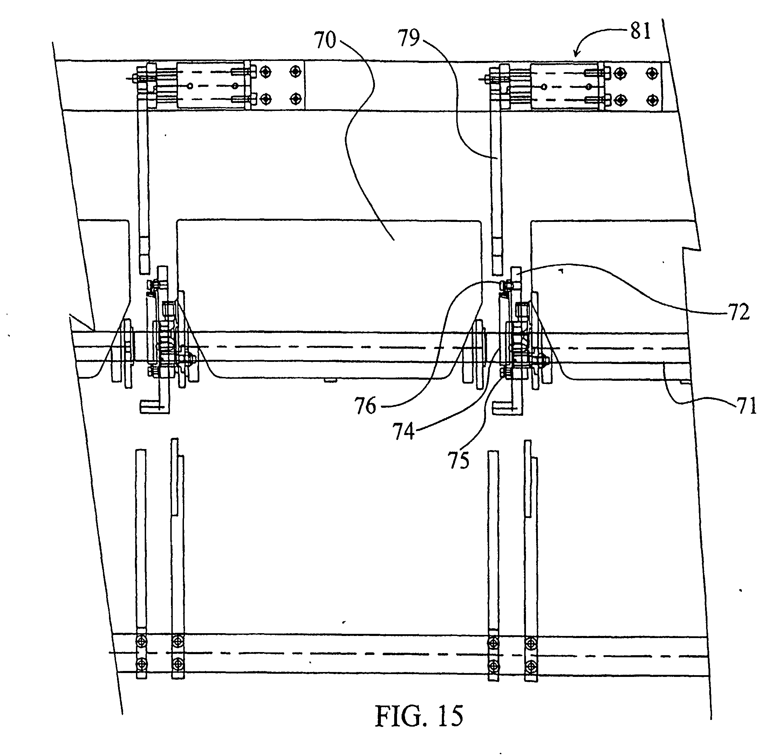

As shown in Figures 14 and 15, the fruit-carrying trays, as represented by the tray 69, have a body 70 carry ing the fruit and which tilts on a shaft 71 carrying a tilting arm 72 rotatable about an intermediate point 73 and which carries a spring 74 fixed between two points 75 and 76 located on different sides of the axis of rotation 73, the upper one on the arm 72 and the lower one on the fixed point outside the latter. In this way the result obtained is that the arm 72 tilts by the action of the spring 74, being able to assume the position shown by solid lines in Figure 14, in which the tray 70 is arranged in the horizontal position, which is that which corresponds to the loading and transport position, a second position being provided which is that indicated by dashed lines 77, in which the arm 72 has tilted so that its indentation 78 has freed the corresponding stop of the tray, allowing the tilting of the latter which corresponds to the discharge operation. For the controlled actuation of the ends of the arm 72, the machine will have movable stops 79, integral with the suspension arms 80, which in their turn are displaceable transversely by the actuating devices shown diagrammatically by 81 in Figure 15, which shows the position of the arm 79 in which no actuation of the tilting arms 72 takes place. According to the position of the said arms 79, the preselected actuation of the trays necessary to complete the weighing operations is obtained.

By means of the assembly of devices which has been described, the machine will be equipped with the means for receiving fruit or other bulk horticultural products, distributing them in individual trays or baskets, weighing each of the said trays individually and tipping them out so as to obtain constant amounts of fruit for wrapping or packaging thereof by means of various outlet channels of the machine itself.

## Claims

1. Automatic weighing machine for fruit and the like, of the type which has a device **(1-8, 48)** for feeding fruit for multiple lines **(9-12, 59-62)** of fruit-conveying trays which are arranged in a closed circuit which comprises feed stations **(48)** for the fruit in bulk, weighing stations **(16, 68)** for the individual trays **(23, 69)** of fruit, and stations for tipping out the trays into the outlet channels **(18-21, 64-67)** towards the packaging, whereby having a tray conveying circuit which comprises an upper branch **(42)** and another, lower branch **(43)** which are parallel, and which run between respective guiding and driving end wheels, having a single transverse suspension bar **(24, 71)** for each of the trays, being said trays **(23, 69)** rotatably mounted on the said bar of the conveyor, **characterized in that** the said trays are locked in a constant horizontal position over the entire path along the conveying circuit by means of a tilting retaining arm **(27, 72)** which is capable of being actuated by any one of the actuating devices corresponding to the different outlet channels **(18-21, 64-67)** of the machine towards the packaging, in accordance with pulses emitted from a central control unit which selects the discharges of the trays **(23, 69)** so as to obtain the same final packaging weight in each of the outlet channels **(18-21, 64-67).**

2. Automatic weighing machine for fruit and the like, according to Claim 1, **characterized in that** the trays **(23, 69)** carrying the fruit or other products are articulated on the transverse bars **(24, 71)** of the conveyor by means of a frame **(31)** on which they are mounted with a capacity for limited vertical displacement, in order to allow the trays **(23, 69)** to be raised slightly from their rest position in the frame, at the weighing point **(16, 68),** where they rest on a receiving platform **(22)** of the weighing unit.

3. Automatic weighing machine for fruit and the like, according to Claim 2, **characterized in that** the trays **(23, 69)** are mounted on a front bar of the tilting frame in slots **(33)** which permit slight vertical displacement of the tray **(23, 69),** which also has in its rear part respective wings **(35)** at each end with indentations **(36)** into which are introduced, likewise with ample vertical clearance, respective stops. **(37)** of the tilting frame.

4. Automatic weighing machine for fruit and the like, according to anyone of the preceding claims, **characterized in that** the trays **(23, 69)** are locked in a horizontal position by means of the interconnection between a double tilting arm **(27, 72)** on a corresponding support fixed to the transverse bar **(26)** of the conveyor on which the tray **(23, 69)** is mounted, which tilting arm **(27, 72)** is subject to the action of an opposing spring **(28, 74)** which tends to maintain it in the locking position and has an indentation **(29, 78)** in which is housed a rod **(30)** rigidly fixed to the frame **(31)** carrying the tray **(23, 69),** determining the position in which the tray is locked in a horizontal position, which is maintained along its path.

5. Automatic weighing machine for fruit and the like, according to claim 4, **characterized in that** the indentation **(29, 78)** of the double tilting retaining arm **(27, 72)** which receives the rod **(30)** of the frame **(31)** carrying the tray has larger dimensions than the said rod in order to permit a certain vertical displacement of the tray in the weighing stage.

6. Automatic weighing machine for fruit and the like, according to anyone of the preceding claims, **characterized in that** the fruit-carrying trays have lower stop regions intended to allow the tray to rest on the platform of the weighing unit, comprising for the said function the lower edge of a front extension **(39)** of the tray and the lower edges of the rear wings **(35, 35')** provided with indentations to receive the corresponding stops of the frame.

7. Machine according to Claim 1, **characterized in that** the feeder consists of an assembly of articulated scoop conveyors **(51, 51'),** each intended to tip the fruit directly to one of the lines of trays **(9-12, 59-62),** including a cowling **(53)** in the upper part of the conveyor for guiding the fruit together with the scoops in the open position, for the discharge of the fruit into the trays **(23, 69).**

8. Machine according to anyone of the preceding claims, **characterized in that** the tilting arm **(72)** of each tray **(69)** has an intermediate axis **(73)** of rotation and a tension spring **(74)** fixed between a point outside the tilting arm and located below the axis of rotation of the latter, and a second point located on the tilting arm and above the axis of rotation, giving rise to a bistable arm tilting to one side or the other of the articulation axis, which determines the positions for retention of the tray (69) and for tilting of the latter.

9. Machine according to Claim 8, **characterized by** the arrangement of stops **(79)** adjustable transversely between a position of contact with the tilting arms **(72)** of the trays **(69)** to determine the stable and tilting positions, and another position inclined towards the other side corresponding to the position for loading and transport.

## Patentansprüche

1. Automatische Wiegemaschine für Obst und Ähnliches, von dem Typ, der ein Gerät (1-8, 48) zum Zuführen von Obst für mehrere Bahnen (9-12, 59-62) von Obsttransportschalen besitzt, die in einem geschlossenen Kreis angeordnet sind, der Zuführstationen (48) für das lose Obst, Wiegestationen (16, 68) für die einzelnen Obstschalen (23, 69) und Stationen zum Ausleeren der Schalen in die Ausgangskanäle (18-21, 64-67) in Richtung auf die Verpackung umfasst, wobei die Wiegemaschine einen Schalentransportkreis besitzt, der einen oberen Zweig (42) und einen anderen, unteren Zweig (43) umfasst, die parallel sind und die zwischen entsprechenden Führungs- und Antriebsendrädem laufen, und wobei die Wiegemaschine einen einzelnen transversalen Aufhängungsträger (24, 71) für jede der Schalen besitzt, wobei die Schalen (23, 69) drehbar an dem Träger des Transportmittels montiert sind, **dadurch gekennzeichnet, dass** die Schalen über den gesamten Weg entlang des Transportkreises in einer konstanten horizontalen Position mittels eines schwenkbaren Haltearms (27, 72) arretiert sind, der durch irgend eines der Betätigungsgeräte in Bezug auf die unterschiedlichen Ausgangskanäle (18-21, 64-67) der Maschine in Richtung auf die Verpackung betätigt werden kann, gemäß Impulsen, die von einer zentralen Steuereinheit ausgegeben werden, die die Leerung der Schalen (23, 69) so auswählt, um das gleiche endgültige Verpackungsgewicht in jedem der Ausgangskanäle (18-21, 64-67) zu erhalten.

2. Automatische Wiegemaschine für Obst und Ähnliches nach Anspruch 1, **dadurch gekennzeichnet, dass** die Schalen (23, 69), welche das Obst oder andere Produkte transportieren, an den Trägem (24, 71) des Transportmittels mittels eines Rahmens (31) schwenkbar gelagert sind, an dem sie mit einer Möglichkeit zur begrenzten Vertikalverlagerung montiert sind, um den Schalen (23, 69) zu ermöglichen, von ihrer Auflageposition in dem Rahmen an dem Wiegepunkt (16, 68) leicht angehoben zu werden, wo sie auf einer Aufnahmeplattform (22) der Wiegeeinheit aufliegen.

3. Automatische Wiegemaschine für Obst und Ähnliches nach Anspruch 2, **dadurch gekennzeichnet, dass** die Schalen (23, 69) an einem Vorderträger des Schwenkrahmens in Schlitzen (33) montiert sind, welche eine geringe Vertikalverlagerung der Schale (23, 69) zulassen, die in ihrem hinteren Teil auch entsprechende Flügel (35) an jedem Ende mit Vertiefungen (36) besitzt, in welche mit ebenso großem Vertikalspielraum entsprechende Anschläge (37) des Schwenkrahmens eingeführt werden.

4. Automatische Wiegemaschine für Obst und Ähnliches nach einem der vorhergehenden Ansprüche, **dadurch gekennzeichnet, dass** die Schalen (23, 69) in einer horizontalen Position mittels der Verbindung zwischen einem doppelten Schwenkarm (27, 72) an einem entsprechenden Halter arretiert sind, der an dem transversalen Träger (26) des Transportmittels fixiert ist, an dem die Schale (23, 69) montiert ist, wobei der Schwenkarm (27, 72) der Wirkung einer gegenüberliegenden Feder (28, 74) unterliegt, welche dazu neigt, ihn in der Arretierposition zu halten, und eine Vertiefung (29, 78) besitzt, in der ein Stab (30) untergebracht ist, der starr an dem Rahmen (31) fixiert ist, der die Schale (23, 69) trägt, wobei er die Position bestimmt, in der die Schale in einer horizontalen Position arretiert wird, die entlang ihres Wegs beibehalten wird.

5. Automatische Wiegemaschine für Obst und Ähnliches nach Anspruch 4, **dadurch gekennzeichnet, dass** die Vertiefung (29, 78) des doppelten schwenkbaren Haltearms (27, 72), welche den Stab (30) des Rahmens (31) aufnimmt, der die Schale transportiert, größere Abmessungen als der Stab besitzt, um eine bestimmte Vertikalverlagerung der Schale in der Wiegestufe zu erlauben.

6. Automatische Wiegemaschine für Obst und Ähnliches nach einem der vorhergehenden Ansprüche, **dadurch gekennzeichnet, dass** die Fruchttransportschalen untere Anschlagbereiche besitzen, welche vorgesehen sind, um der Schale zu erlauben, auf der Plattform der Wiegeeinheit aufzuliegen, wobei sie für diese Funktion die untere Kante eines vorderen Anbaus (39) der Schale und die unteren Kanten der hinteren Flügel (35, 35) umfassen, welche mit Vertiefungen versehen sind, um die entsprechenden Anschläge des Rahmens aufzunehmen.

7. Maschine nach Anspruch 1, **dadurch gekennzeichnet, dass** die Zuführung aus einer Konstruktion schwenkbar gelagerter, schaufelförmiger Transportmittel (51, 51) besteht, wobei jedes vorgesehen ist, das Obst direkt auf eine der Schalenlinien (9-12, 59-62) zu kippen, wobei sie im oberen Abschnitt des Transportmittels eine Verkleidung (53) besitzt, um das Obst zusammen mit den Schaufeln in die offene Position zum Entladen der Frucht in die Schalen (23, 69) zu führen.

8. Maschine nach einem der vorhergehenden Ansprüche, **dadurch gekennzeichnet, dass** der Schwenkarm (72) jeder Schale (69) eine Zwischendrehachse (73) und eine Spannungsfeder (74) besitzt, welche zwischen einem Punkt, der außerhalb des Schwenkarms und der unterhalb der Drehachse letzterer angeordnet ist, und einem zweiten Punkt fixiert ist, der an dem Schwenkarm und oberhalb der Drehachse angeordnet ist, was zu einem bistabilen Arm führt, der zur einen oder anderen Seite der Gelenkachse schwenkt und der die Positionen zum Halten der Schale (69) und zum Kippen letzterer bestimmt.

9. Maschine nach Anspruch 8, **gekennzeichnet durch** das Anordnen von Anschläge (79), welche quer verstellbar sind zwischen einer Kontaktposition mit den Schwenkarmen (72) der Schalen (69), um die Sicherungs- und Kipppositionen zu bestimmen, und einer anderen Position, die in Richtung auf die andere Seite in Bezug auf die Position zum Beladen und Transportieren geneigt ist.

## Revendications

1. Machine de pesée automatique pour fruits et autres, du type qui a un dispositif (1 à 8, 48) pour charger les fruits sur des lignes multiples (9 à 12, 59 à 62) de plateaux de transport de fruits qui sont agencés en un circuit fermé qui comprend des postes de chargement (48) pour les fruits en vrac, des postes de pesée (16, 68) pour les plateaux individuels (23, 69) de fruits, et des postes de basculement des plateaux dans les canaux de sortie (18 à 21, 64 à 67) vers l'emballage, ayant ainsi un circuit de transport de plateaux qui comprend une branche supérieure (42) et une autre branche, plus basse (43), qui sont parallèles et qui se déplacent entre des roulettes d'extrémité respectives de guidage et d'entraînement, ayant une barre de suspension transversale unique (24, 71) pour chacun des plateaux, lesdits plateaux (23, 69) étant montés de façon rotative sur ladite barre du transporteur, **caractérisé en ce que** lesdits plateaux sont bloqués dans une position horizontale constante sur la totalité de la longueur du circuit de transport au moyen d'un bras de retenue de basculement (27, 72) qui est capable d'être actionné par l'un quelconque des dispositifs d'actionnement correspondant aux différents canaux de sortie (18 à 21, 64 à 67) de la machine vers l'emballage, selon des impulsions émises par une unité de commande centrale qui sélectionne les déchargements des plateaux (23, 69) de manière à obtenir le même poids d'emballage final dans chacun des canaux de sortie (18 à 21, 64 à 67).

2. Machine de pesée automatique pour fruits et autres selon la revendication 1, **caractérisée en ce que** les plateaux (23, 69) portant les fruits ou autres produits sont articulés sur les barres transversales (24, 71) du transporteur au moyen d'un châssis (31) sur lequel ils sont montés avec une capacité de déplacement vertical limité, afin de permettre aux plateaux (23, 69) d'être légèrement soulevés de leur position de repos dans le châssis, au point de pesée (16, 68), où ils reposent sur une plate-forme de réception (22) de l'unité de pesée.

3. Machine de pesée automatique pour fruits et autres selon la revendication 2, **caractérisée en ce que** les plateaux (23, 69) sont montés sur une barre frontale du châssis basculant dans des fentes (33) qui permettent un léger déplacement vertical du plateau (23, 69), qui a également dans sa partie arrière des ailes (35) respectives, à chaque extrémité avec des échancrures (36) dans lesquelles sont introduites, de même avec un jeu vertical ample, des butées respectives (37) du châssis basculant.

4. Machine de pesée automatique pour fruits et autres selon l'une quelconque des revendications précédentes, **caractérisée en ce que** les plateaux (23, 69) sont bloqués en position horizontale au moyen de l'interconnexion entre un bras de basculement double (27, 72) sur un support correspondant fixé sur la barre transversale (26) du transporteur sur lequel le plateau (23, 69) est monté, lequel bras de basculement (27, 72) est soumis à l'action d'un ressort en opposition (28, 74) qui tend à le maintenir dans la position de verrouillage et a une échancrure (29, 78) dans laquelle est reçue une tige (30) fixée de manière rigide au châssis (31) portant le plateau (23, 69), déterminant la position dans laquelle le plateau est bloqué en position horizontale, qui est conservée sur son parcours.

5. Machine de pesée automatique pour fruits et autres selon la revendication 4, **caractérisée en ce que** l'échancrure (29, 78) du bras de basculement double (27, 72) de rétention qui reçoit la tige (30) du châssis (31) portant le plateau a des dimensions plus grandes que ladite tige afin de permettre un certain déplacement vertical du plateau à l'étape de la pesée.

6. Machine de pesée automatique pour fruits et autres selon l'une quelconque des revendications précédentes, **caractérisée en ce que** les plateaux portant les fruits ont des régions de butées inférieures destinées à permettre au plateau de reposer sur la plate-forme de l'unité de pesée, comprenant pour ladite fonction le bord inférieur d'une extension frontale (39) du plateau et les bords inférieurs des ailes arrières (35, 35') dotées d'échancrures pour recevoir les butées correspondantes du châssis.

7. Machine selon la revendication 1, **caractérisée en ce que** le chargeur consiste en un ensemble de transporteurs à godets articulés (51, 51'), chacun destiné à basculer les fruits directement sur l'une des lignes de plateaux (9 à 12, 59 à 62), incluant un bec (53) dans la partie supérieure du transporteur pour guider les fruits avec les godets en position ouverte, pour le déchargement des fruits dans les plateaux (23, 69).

8. Machine selon l'une quelconque des revendications précédentes, **caractérisée en ce que** le bras de basculement (72) de chaque plateau (69) a un axe intermédiaire (73) de rotation et un ressort de tension (74) fixé entre un point à l'extérieur du bras de basculement et situé sous l'axe de rotation de ce dernier, et un deuxième point situé sur le bras de basculement et au dessus de l'axe de rotation, donnant lieu à un bras bistable basculant d'un côté ou de l'autre de l'axe d'articulation, qui détermine les positions pour la retenue du plateau (69) et pour le basculement de ce dernier.

9. Machine selon la revendication 8, **caractérisée par** l'agencement de butées (79) ajustables transversalement entre une position de contact avec les bras de basculement (72) des plateaux (69) pour déterminer les positions stables et de basculement, et une autre position inclinée vers l'autre côté correspondant à la position pour le chargement et le transport.
